Europäisches Patentamt

European Patent Office

Office européen des brevets

(11) Publication number: **0 231 108**
**A2**

## EUROPEAN PATENT APPLICATION

(21) Application number: 87300586.2

(22) Date of filing: 23.01.87

(51) Int. Cl.³: **H 04 M 1/278**

(30) Priority: 23.01.86 IQ 1986

(43) Date of publication of application:
05.08.87 Bulletin 87/32

(84) Designated Contracting States:
DE FR GB IT

(71) Applicant: Al-Rawi, Omar Mahmood Atia
Meria Al-Firdous quarter No 8/4/630
Baghdad(IQ)

(72) Inventor: Al-Rawi, Omar Mahmood Atia
Meria Al-Firdous quarter No 8/4/630
Baghdad(IQ)

(74) Representative: Godsill, John Kenneth et al,
Haseltine Lake & Co. Hazlitt House 28 Southampton
Buildings Chancery Lane
London WC2A 1AT(GB)

(54) Telephone dialling system.

(57) A small receiver (1) is connected to a telephone (3) for receiving punched cards (2) by means of which the number punched on the card can be dialled. A device (16) for punching the cards, and a wallet (22) for holding the cards are also described. The system is particularly useful for blind and handicapped people.

FIG.1.

EP 0 231 108 A2

TELEPHONE DIALLING SYSTEM                    0231108

This invention relates to a telephone dialling system.

Telephone dialling can currently be effected in two ways:

by rotating a dial by different amounts corresponding to the number to be dialled;

or by the "push button" system developed to suit the computerised phones with memory.

Both these types of dialling take time, and generally need to be operated by people who have the use of their hands and eyes, and who are sufficently educated or intelligent to recognise numerals and to follow a dialling sequence. Also, in emergency conditions, a person in a poor psychological condition or panic may dial a wrong number. It is an object of the invention to obviate or at least mitigate the disadvantages of known dialling system.

According to the present invention there is provided a telephone dialling system characterised by a receiver having means for connection to dialling lines of a telephone and adapted to receive a dialling element carrying a unique representation of the sequence of numbers to be dialled, the receiver including means responsive to said unique representation to dial said sequence when said dialling element is inserted into said receiver.

The invention also provides a method of dialling a telephone number, a device for creating a dialling element, and a dialling element for use with the system.

For a better understanding of the present invention, and to show how the same may be carried into effect, reference will now be made, by way of example, to the accompanying drawings in which:-

Figures 1 and 2 illustrate respectively known types of telephone modified with the system of an embodiment of the present invention;

Figure 3 is a plan view of a card for use as a dialling element in the system;

Figure 4 is a perspective view of a device in an open position for punching the card;

Figure 5 is a side view of the device of Figure 4 in its closed position;

Figure 6 is a perspective view of a wallet for holding a plurality of cards;

Figures 7 and 8 illustrate diagrammatically a receiver for the card; and

Figure 9 illustrates circuitry used in the system.

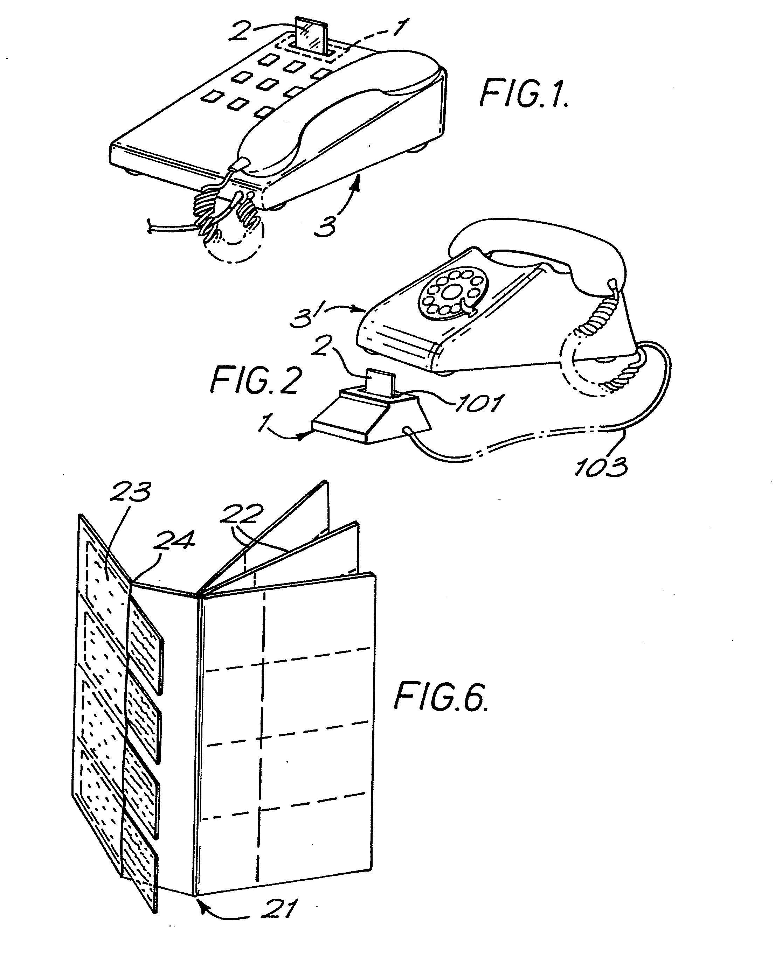

The telephone dialling system includes a receiver 1, which may be incorporated in the housing of a telephone 3 as shown in Figure 1 at the manufacturing stage, or may be a box connected externally of the telephone as shown in Figure 2. The receiver is for receiving dialling elements in the form of punched cards 2 which will be described in more detail hereinafter. The receiver has an aperture 101 for receiving the card, the size of this aperture corresponding to the size of the card used. The card may be any suitable size, for example as small as 1 x 2cm or as large as a $1^1/4$ postcard.

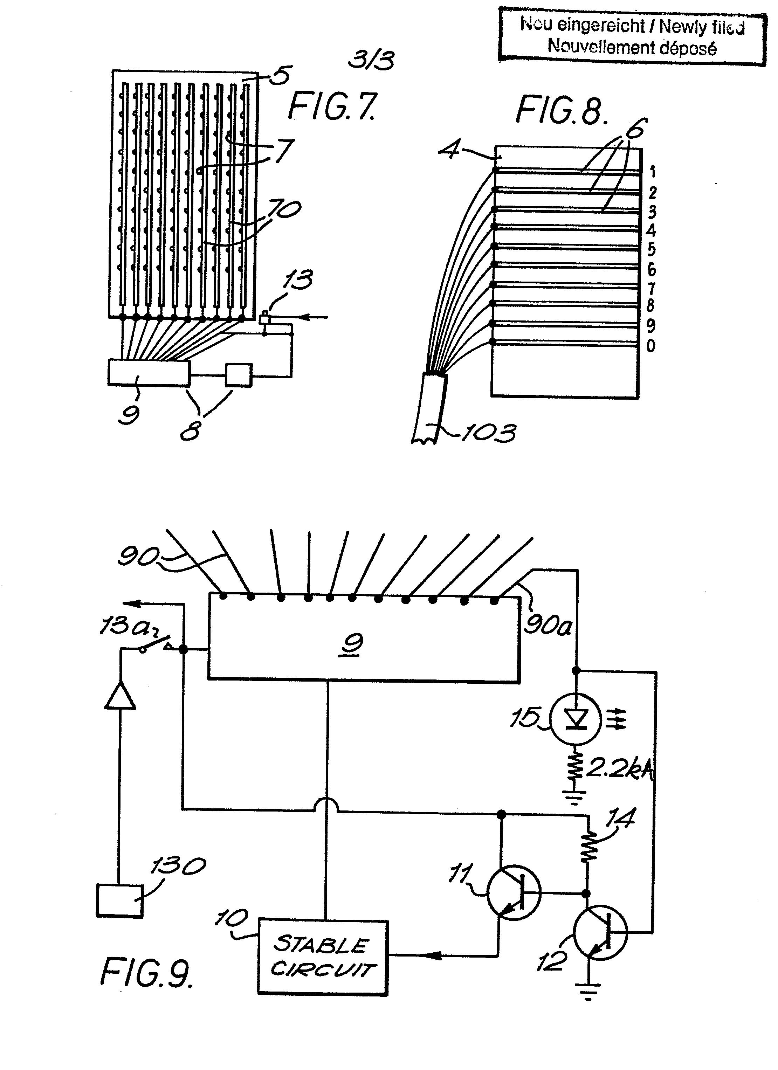

Referring now to Figures 7 and 8 the receiver has two arrays of conductors, shown separately in Figures 7 and 8 but which will be arranged to face one another in the receiver as will become apparent. The first array 4 of conductors comprises ten horizontally extending conductors 6 connected respectively to the dialling lines of the ten numbered buttons 1 to 9 and 0 (as illustrated) of the telephone illustrated in Figure 1 or to the dialling lines of a dialler of a telephone of the type illustrated in Figure 2. With reference to Figure 2, a multi-stranded cable 103 serves for the connection. The second array 5 has a plurality of vertically arranged conductors 70 with small spring type or resilient conductors 7 being provided to contact the horizontally arranged conductors 6 at each cross-over point of the vertically and horizontally arranged conductors respectively. The vertically arranged conductors 70 are connected to a counter 9 of circuitry 8 arranged to supply current pulses sequentially to the vertically arranged conductors to achieve dialling in a manner to be described in more detail hereinafter. When all the conductors have received a current pulse, the end of the sequence is indicated by illumination of a light emitting diode 15 (Figure 9). As illustrated, there are ten vertically arranged conductors 7 but there may be twelve or more. As an example, dialling may require 0.1 seconds for each line. This means that, for an Iraqi system having nine lines, the dialling time is about one second.

The circuitry 8 will now be described in more detail with reference to Figure 9. The counter 9 has ten lines as illustrated but it may be a sixteen line counter. Actuation of the counter is via a stable circuit (AC) 10 which emits pulses at 0.1 second intervals to cause the counter to supply current pulses sequentially to output lines 90 connected respectively to the vertically arranged conductors 70. The circuitry 8 also includes two transistors, a first one of which 11 has its collector connected to a supply voltage, its emitter connected as an input to the stable circuit 10 and its base connected to the collector of a second one of the transistors 12. The second transistor 12 has its emitter connected to earth and its collector connected to the voltage supply via a resistor 14. The light emitting diode 15 is supplied from a last one of the output lines 90a of the counter 9. The base of the transistor 12 is also supplied from this output line 90a. Input to the circuitry 8 is via a switch 13a arranged between the counter 9 and a DC voltage supply 130. The switch 13a is actuated by a button 13 which is arranged in the receiver and which is pressed when the card is input into the receiver. With the switch depressed, current passes via the one of the transistors which has an activated base. That is, on starting, since there is no current on output line 90a to the base of transistor 12, transistor 12 is effectively turned off. Thus, current from the DC voltage supply 130 passes via the first transistor 11 actuated by a base current via resistor 14. Hence, the stable circuit is actuated and pulses the counter as described earlier. When the last output line 90a is pulsed, current is supplied to the light emitting diode to illuminate it, and also the base of transistor 12, turning this transistor on so that current passes through the transistor 12 and not through the transistor 11. Hence, the supply to the stable circuit is shut off to stop the dialling. Dialling will be repeated if the card is pressed into the receiver again, and the card must stay in the pressed position until dialling is completed (about one second).

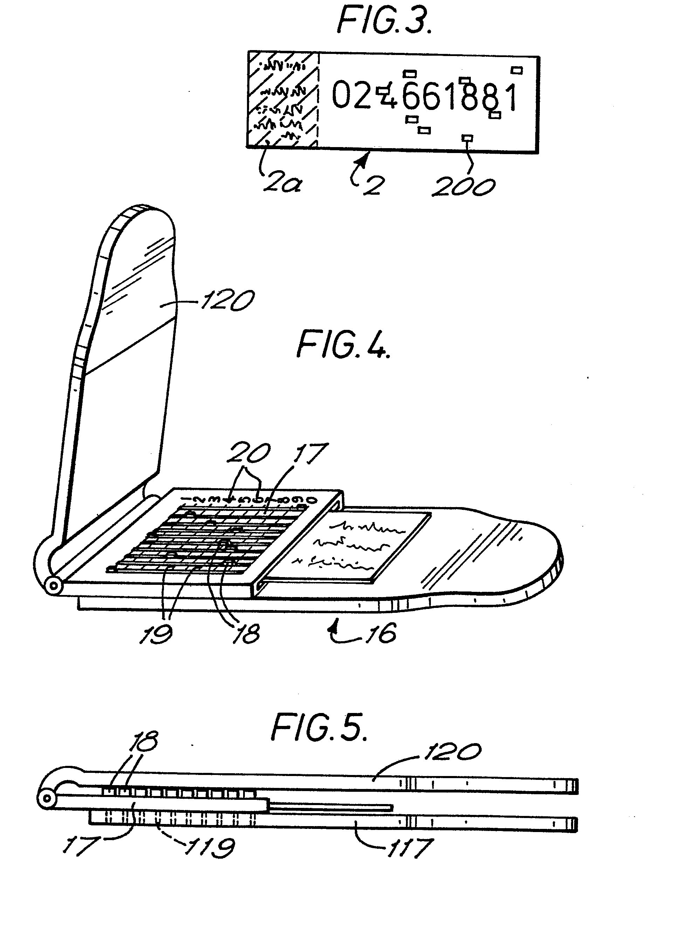

The current pulse is passed from each vertically arranged conductor 7 to one of the horizontally arranged conductors 6 selected in accordance with the number for dialling and controlled by openings or holes 200 in the card 2. The card prevents contact by the resilient conductors 7 at the cross over points except via the openings in the card. That is, the card, referring now to Figure 3, is punched to provide openings 200 at positions dependent on the number to be dialled. As an example, consider the telephone number 024661881. The opening for the zero will be in the first line vertically and the tenth line horizontally. The number 2 will be in the second line vertically and the second horizontally. The number 4 will be on the third line vertically and the fourth line horizontally, and so on. The card should be manufactured of a substance sufficiently hard to permit re-use, for example plastic.

The correctly positioned holes are provided in the card by a suitable punching device, one example of which is illustrated in Figures 4 and 5. The punching device 16 has dimensions to suit the system. It comprises a metallic plate 17 cut with longitudinally arranged grooves or slots to correspond to the vertically arranged lines of the second receiver array 5. Punching elements 18 in the form of buttons or pegs with metallic protrusions for punching are movably arranged in the longitudinally cut slots, one button in each slot. The plate has horizontal lines to represent the horizontally arranged conductors 6 of the first receiver array 4, there being a small recess (or dimple) on each horizontal line to permit the punching elements 18 to be positioned in the correct place. For marking the horizontal lines, at the end are written respectively the numerals 1 to 9 and 0, indicated generally at 20. There is a further plate 117 provided underneath the plate 17 and having openings under each cross-over point. This plate 117 is pivotably connected to a further plate 120 to form a press for punching cards inserted into the punching device.

To prepare a card for use with the system, the number to be dialled is arranged on the punching device by moving the punching elements 18 in the slots of the plate 17. The press formed of plates 117 and 120 is then closed to punch the card 2. The card 2 carries an identification portion 2a (Figure 3) on which can be placed the name of the person to be dialled using the punched number. Alternatively, a photograph of the person or place could be placed there for assisting uneducated people, or similarly a sign such as, as in Iraq , a crescent for a Hospital or a star for the Police. For the blind the number could be embossed on the identification portion in Braille.

To use the system, the telephone receiver is lifted and the prepared card is placed in the receiver 1. This actuates the button 13 (Figure 9) to commence dialling. Dialling is achieved by the current pulses supplied sequentially to the vertically arranged conductors passing only to the horizontally arranged conductor in each case selected via the corresponding hole 200 of the card 2. When the light emitting diode is illuminated, this indicates that dialling has been completed. If it is wished to repeat dialling, the telephone receiver is replaced and lifted again and the card re-pressed.

Figure 6 illustrates a plastic holder or wallet for retaining the cards, having a plurality of pages 22, each page being divided into small pockets 23 corresponding in size to the size of the cards. Each page 22 can be bent longitudinally at a level 24 of the end of the small pocket to allow easy removal of the card. The wallet is preferably made of plastics material.

The embodiment of the invention described above gives benefit of easy and correct dialling for the blind and handicapped, for the uneducated and for people with poor sight, indeed for anyone, especially people in a hurry who may dial the wrong number. The use of the card means that no mistake in the number can be made. Further, the number can be kept secret. The system has particular application in car telephones where the driver needs to pay attention to the road.

It will be appreciated that while the above embodiment relates to a telephone dialling system having a receiver with contacting conductors, other arrangements utilising the principles of the present invention could be adopted. In particular, the receiver could be an arrangement of photocells.

CLAIMS:

1. A telephone dialling system characterised by a receiver (1) having means (6, 103) for connection to dialling lines of a telephone (3) and adapted to receive a dialling element (2) carrying a unique representation (200) of the sequence of numbers to be dialled, the receiver including means (7, 70, 8) responsive to said unique representations to dial said sequence when said dialling element (2) is inserted into said receiver (1).

2. A system as claimed in claim 1, in which the connection means (6, 103) comprises a first plurality of conductive paths (6) extending in a first direction for connection respectively to dialling lines representing numerals 0 to 9 of a telephone, the means responsive to the unique representation comprises a second plurality of conductive paths (70) extending in a second direction, substantially perpendicular to the first direction, to provide cross-over points (7) at which there are respective connections between the first and second pluralities of conductive paths, said unique representation having a configuration so as to permit communication between the cross-over points only at one point on each of the second plurality of conductive paths.

3. A system as claimed in claim 2, in which the means responsive to the unique representation includes circuitry (9, 12) for supplying current sequentially to each of the second plurality of conductive paths.

4. A system as claimed in any preceding claim, in which the receiver includes switch means (13) for initiating dialling, said switch means being controlled by insertion of the dialling element.

5. A dialling element adapted for use in a system according to any preceding claim, comprising a card (2) provided with apertures (200) in a configuration to provide said unique representations.

6.    A dialling element as claimed in claim 5, which carries an identification portion for providing pictorial or numerical identification of the sequence of numbers represented by the unique representation.

7.    In combination, a telephone dialling system as claimed in anyone of claim 1 to 4 and at least one dialling element as claimed in claim 5 or 6.

8.    A device for forming apertures in a dialling element as claimed in claim 5 or 6, the device (16) comprising:    a plurality of punching elements (18) movable to enable them to be arranged in a configuration corresponding to the desired configuration of the apertures in the dialling element;    means for receiving the card in such a manner as to be aligned with the punching elements;    and means for causing the punching element to pass through the card.

9.    A holder comprising:    at least one substantially rectangular sheet (22) having a fold region (24) extending substantially parallel to an edge of the sheet; and a plurality of pockets (23) arranged along said edge of the sheet with respective openings at said fold region, said pockets being sized to carry respectively a plurality of dialling elements as claimed in claim 5 or 6, whereby said dialling elements can be removed in a simple manner from the pockets by bending the sheet along the fold region to enable an end portion of a dialling element to be grasped and thereby removed from its pocket.

10.    A method of dialling a telephone characterised by: inserting into a receiver (1) connected to dialling lines of a telephone a dialling element (2) carrying a unique representation of a sequence of numbers to be dialled.

FIG.1.

FIG.2

FIG.6.

2/3

## FIG.3.

2a  2  200

## FIG.4.

120  20  17  19  18  16

## FIG.5.

18  120  17  119  117

FIG.7.

5

7

10

13

9    8

FIG.8.

4

6

1
2
3
4
5
6
7
8
9
0

103

FIG.9.

90

13a

90a

9

15

2.2kA

130

14

11

12

10    STABLE CIRCUIT